# EUROPEAN PATENT SPECIFICATION

(11) **EP 3 947 586 B1**
(45) Date of publication and mention of the grant of the patent: **02.09.2026**
(21) Application number: 20784275.8
(22) Date of filing: 05.04.2020
(51) Int. Cl.: C09J 133/18, C09J 11/00, C08F 22/32, C08F 2/44, C08F 4/60, C08K 5/11, C09J 5/00, C08F 265/06, C09J 4/00, C09J 4/06, C08F 4/70, C08K 5/56

(54) **FLEXIBLE PHOTOCURABLE CYANOACRYLATE COMPOSITIONS**
FLEXIBLE LICHTHÄRTBARE CYANOACRYLATZUSAMMENSETZUNGEN
COMPOSITIONS DE CYANOACRYLATE PHOTODURCISSABLES FLEXIBLES

(30) Priority: 04.04.2019 US 201962829273 P
(43) Date of publication of application: 09.02.2022
(73) Proprietor: Henkel AG & Co. KGaA, 40589 Düsseldorf (DE)
(72) Inventor: WEI, Xinyu, Newington, Connecticut 06111 (US); ATTARWALA, Shabbir T., Simsbury, Connecticut 06070 (US); LI, Ling, Glastonbury, Connecticut 06033 (US)
(86) International application number: PCT/US2020/026789
(87) International publication number: WO 2020/206405

(56) References cited:
- EP-A1- 3 124 509
- WO-A1-02/053666
- WO-A1-02/053666
- WO-A1-98/38260
- JP-A- 2011 231 210
- US-A1- 2010 213 096
- US-B1- 6 503 959

## Description

### BACKGROUND

### Field

The present invention relates to a photocurable composition which includes a cyanoacrylate component, a metallocene component, a photoinitiator component and a plasticizer component, reaction products of which show among other things improved flexibility in terms of elongation at break.

### Brief Description of Related Technology

Cyanoacrylate adhesive compositions are well known, and widely used as quick setting, instant adhesives with a wide variety of uses. See H.V. Coover, D.W. Dreifus and J.T. O'Connor, "Cyanoacrylate Adhesives" in Handbook of Adhesives, 27, 463-77, I. Skeist, ed., Van Nostrand Reinhold, New York, 3rd ed. (1990). See also G.H. Millet, "Cyanoacrylate Adhesives" in Structural Adhesives: Chemistry and Technology, S.R. Hartshorn, ed., Plenun Press, New York, p. 249-307 (1986).

Cyanoacrylate compositions ordinarily tend to cure to form relatively brittle polymeric materials. This is an undesirable property for certain applications where a degree of flexibility in the polymeric material is desired. Such applications include bonding flexible materials where a degree of flexibility in the bond to match the flexibility of the material is desired. It is also desirable to have a flexible polymeric material in applications where the polymeric material may be subjected to varying forces in its end-use application. For example, if the polymeric material has bonded together two substrates, the substrates may not remain in an undisturbed condition but may be subject to external forces, such as where the substrates form part of a moving object, or part of a stationary object which is subjected to one or more continuous or occasional forces from other moving objects.

In the past, efforts have been made to improve the flexibility of cured products of cyanoacrylate compositions. See e.g. U.S. Patent Nos. 2,776,232, 2,784,215, 2,784,127, 3,699,127, 3,961,966, 4,364,876, and 4,444,933. But not with photocurable cyanoacrylates, such as are described in U.S. Patent No. 5,922,783 (Wojciak).

The '783 patent provides a photocurable composition comprising: (a) a 2-cyanoacrylate component, (b) a metallocene component, and (c) a photoinitiator component. No mention is made in the '783 patent to include plasticizers or to try to flexiblize the cured product of the so-disclosed photocurable compositions. EP 3124509 A1 describes photocurable cyanoacrylate compositions comprising ferrocene and plasticizers as additives.

One approach to overcoming the brittleness of conventional polymerized cyanoacrylate adhesives has been to plasticize the composition through the use of monomer mixtures. The use of mixtures of cyanoacrylate monomers is thought to result in a more flexible polymeric material when the monomer mixture is cured. A second approach has been to incorporate plasticizers into cyanoacrylate compositions. The flexibility here is generally obtained at the expense of cure speed and/or bond strength.

U.S. Patent No. 6,977,278 (Misiak) describes certain cyanoacrylate compositions comprising: (i) at least one lower cyanoacrylate monomer component selected from ethyl cyanoacrylate and methoxycyanoacrylate; (ii) at least one higher cyanoacrylate monomer component in an amount greater than 12% by weight based on the total weight of the combination of the lower cyanoacrylate monomer and the higher cyanoacrylate monomer, and selected from n-propyl-cyanoacrylate, iso-propyl cyanoacrylate, n-butylcyanoacrylate, sec-butyl-cyanoacrylate, iso-butyl-cyanoacrylate, tert-butyl-cyanoacrylate, n-pentyl-cyanoacrylate, 1-methyl-butyl-cyanoacrylate, 1-ethyl-propyl-cyanoacrylate, neopentyl-cyanoacrylate, n-hexyl-cyanoacrylate, 1-methyl pentyl-cyanoacrylate, n-heptyl-cyanoacrylate, n-octyl-cyanoacrylate, n-nonyl-cyanoacrylate, n-decyl-cyanoacrylate, n-undecyl-cyanoacrylate, n-dodecyl-cyanoacrylate, cyclohexyl-cyanoacrylate, benzyl-cyanoacrylate, phenyl-cyanoacrylate, tetrahydrofurfuryl-cyanoacrylate, allyl cyanoacrylate, propargyl-cyanoacrylate, 2-butenyl-cyanoacrylate, phenethyl-cyanoacrylate, chloropropyl-cyanoacrylate, ethoxyethyl-cyanoacrylate, ethoxypropyl-cyanoacrylate, ethoxy isopropyl-cyanoacrylate, propoxyethyl-cyanoacrylate, isopropoxyethyl-cyanoacrylate, butoxyethyl-cyanoacrylate, methoxypropyl-cyanoacrylate, methoxy isopropyl-cyanoacrylate, methoxy butyl-cyanoacrylate, propoxymethyl-cyanoacrylate, propoxy ethyl-cyanoacrylate, propoxy propyl-cyanoacrylate, butoxymethyl-cyanoacrylate, butoxyethyl-cyanoacrylate, butoxypropyl-cyanoacrylate, butoxyisopropyl-cyanoacrylate, butoxy butyl-cyanoacrylate, iso-nonyl-cyanoacrylate, iso-decyl-cyanoacrylate, cyclohexyl methyl-cyanoacrylate, naphtyl-cyanoacrylate, 2-(2'-methoxy)-ethoxy ethyl-cyanoacrylate, 2-(2'-ethoxy)-ethoxy ethyl-cyanoacrylate, 2-(2'-propyloxy)-ethoxy ethyl-cyanoacrylate, 2-(2'-butyloxy)-ethoxy ethyl-cyanoacrylate, 2-(2'-pentyloxy)-ethoxy ethyl-cyanoacrylate, 2-(2'-hexyloxy)-ethoxy ethyl-cyanoacrylate, 2-(2'-methoxy)-propyloxy propyl-cyanoacrylate, 2-(2'-ethoxy)-propyloxy propyl-cyanoacrylate, 2-(2'-propyloxy)-propyloxy propyl-cyanoacrylate, 2-(2'-pentyloxy)-propyloxy propyl-cyanoacrylate, 2-(2'-hexyloxy)-propyloxy propyl-cyanoacrylate, 2-(2'-methoxy)-butyloxy butylcyanoacrylate, 2-(2'-ethoxy)-butyloxy butyl-cyanoacrylate, 2-(2'-butyloxy)-butyloxy butyl-cyanoacrylate, 2-(3'-methoxy)-propyloxy ethyl-cyanoacrylate, 2-(3'-methoxy)-butyloxy ethyl-cyanoacrylate, 2-(3'-methoxy)-propyloxy propyl-cyanoacrylate, 2-(3'-methoxy)-butyloxy propyl-cyanoacrylate, 2-(2'-methoxy)-ethoxy propyl-cyanoacrylate, and 2-(2'-methoxy)-ethoxy, butyl-cyanoacrylate; (iii) at least one plasticizer component comprising at least one ester group containing plasticizer, the plasticizer component being miscible in a mixture of component (i) and component (ii); the plasticizer component being present in the composition in an amount between about 15 to about 40% by weight of the composition, and the plasticizer component having an Ap/Po ratio in the range of about 1 to less than about 6, provided the plasticizer component does not include pentaerythritoltetrabenzoate as the sole plasticizer.

The '278 patent makes clear that amounts of plasticizer up to 12 weight percent do not result in the desired properties and very high amounts of plasticizer deleteriously affect cure speeds and bond strength so that it appears that the desired flexibility can be achieved in the cured compositions if amounts less than about 40 weight percent are used.

More recently, U.S. Patent No. 9,528,034 (Li) describes and claims a cyanoacrylate composition, comprising:
(a) a cyanoacrylate component comprising the combination of ethyl-2-cyanoacrylate and octyl-2-cyanoacrylate; and (b) acetyl triethyl citrate in an amount of from about 5 weight percent to less than about 15 weight percent. No mention is made in the '034 patent that the teachings therein may be extended to a photocurable cyanoacrylate composition.

Despite the state of the technology, there has been a long standing, but yet unmet, desire to achieve a photocurable cyanoacrylate composition showing all of the attributes of photocurable cyanoacrylate composition and adding to that a degree of flexibility. It would accordingly be quite advantageous to provide a solution to that desire.

### SUMMARY

The present invention provides just that.

Indeed, the present invention provides photocurable compositions which include a cyanoacrylate component (such as ethyl-2-cyanoacrylate), a metallocene component (such as ferrocene), a photoinitiator component (such as 2,4,6-trimethylbenzoyldiphenylphosphine oxide), and a plasticizer component as defined in the appended claims.

In addition, the present invention is directed to reaction products of the inventive compositions.

Also, a method of preparing the inventive compositions is disclosed.

And the invention is directed to a method of bonding substrates using the inventive compositions.

The invention will be more fully understood by a reading of the section entitled "Detailed Description", which follows.

### DETAILED DESCRIPTION

As noted above, the present invention relates to a photocurable composition which includes a cyanoacrylate component, a metallocene component, a photoinitiator component and a plasticizer component as defined in the claims.

The cyanoacrylate component includes cyanoacrylate monomers which may be chosen with a raft of substituents, such as those represented by H₂C=C(CN)-COOR, where R is selected from C₁₋₁₅ alkyl, alkoxyalkyl, cycloalkyl, alkenyl, aralkyl, aryl, allyl and haloalkyl groups. Desirably, the cyanoacrylate monomer is selected from methyl cyanoacrylate, ethyl-2-cyanoacrylate, propyl cyanoacrylates, butyl cyanoacrylates, octyl cyanoacrylates, allyl-2-cyanoacrylate, β-methoxyethyl-2-cyanoacrylate and combinations thereof. A particularly desirable cyanoacrylate monomer for use herein is ethyl-2-cyanoacrylate.

The amount of the cyanoacrylate component is about 65 weight percent to about 95 weight percent, such as about 70 weight percent to about 85 weight percent, desirably about 75 weight percent to about 80 weight percent.

A variety of metallocenes are suitable for use herein. Those materials of particular interest herein may be represented by metallocenes within structure I: 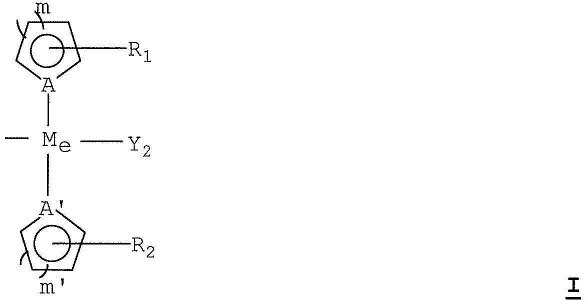 where R₁ and R₂ may be the same or different and may occur at least once and up to as many four times on each ring in the event of a five-membered ring and up to as many as five times on each ring in the event of a six-membered ring;
R₁ and R₂ may be selected from H; any straight- or branched-chain alkyl constituent having from 1 to about 8 carbon atoms, such as CH₃, CH₂CH₃, CH₂CH₂CH₃, CH(CH₃)₂, C(CH₃)₃ or the like; acetyl; vinyl; allyl; hydroxyl; carboxyl; -(CH₂)ₙ-OH, where n may be an integer in the range of 1 to about 8; -(CH₂)ₙ-COOR₃, where n may be an integer in the range of 1 to about 8 and R₃ may be any straight- or branched-chain alkyl constituent having from 1 to about 8 carbon atoms; H; Li; Na; or -(CH₂)_{n'}, where n' may be an integer in the range of 2 to about 8; -(CH₂)ₙ-OR₄, wherein n may be an integer in the range of 1 to about 8 and R₄ may be any straight- or branched-chain alkyl constituent having from 1 to about 8 carbon atoms; or -(CH₂)ₙ-N⁺(CH₃)₃ X⁻, where n may be an integer in the range of 1 to about 8 and X may be Cl⁻, Br⁻, I⁻, ClO₄⁻ or BF₄⁻;
Y₁ and Y₂ may not be present at all, but when at least one is present they may be the same or different and may be selected from H, Cl⁻, Br⁻, I⁻, cyano, methoxy, acetyl, hydroxy, nitro, trialkylamines, triaryamines, trialkylphospines, triphenylamine, tosyl and the like;
A and A' may be the same or different and may be C or N;
m and m' may be the same or different and may be 1 or 2; and
Mₑ is Fe, Ti, Ru, Co, Ni, Cr, Cu, Mn, Pd, Ag, Rh, Pt, Zr, Hf, Nb, V, Mo and the like.

Of course, depending on valence state, the element represented by Mₑ may have additional ligands -- Y₁ and Y₂associated therewith beyond the carbocyclic ligands depicted above (such as where Mₑ is Ti and Y₁ and Y₂ are Cl⁻).

Alternatively, the metallocene of structure I may be modified to include materials such as those embraced by metallocene structure IA: 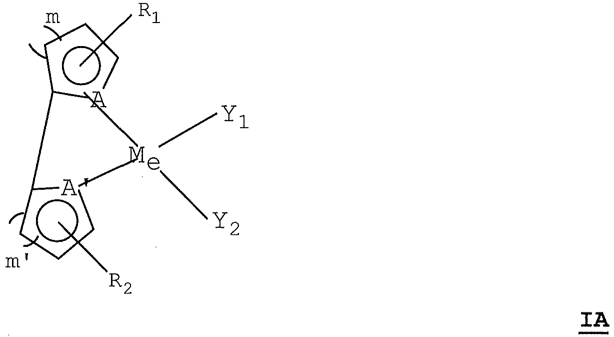 where R₁, R₂, Y₁, Y₂, A, A', m, m' and Mₑ are as defined above. A particularly desirable example of such a material is where R₁ and R₂ are each H; Y₁ and Y₂ are each Cl; A and A' are each N; m and m' are each 2 and Mₑ is Ru.

Within the metallocene of structure I, well-suited metallocenes may be chosen from within the metallocene of structure II: 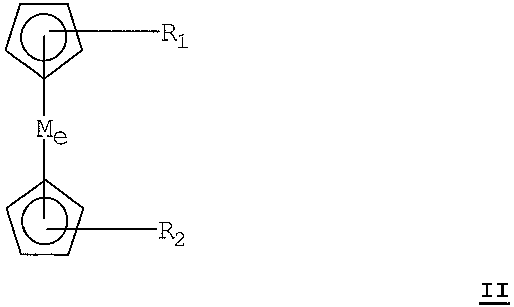 where R₁, R₂ and Mₑ are as defined above.

Particularly well-suited metallocenes from within structure I may be chosen where R₁, R₂, Y₁, Y₂, m and m' are as defined above, and Mₑ is chosen from Ti, Cr, Cu, Mn, Ag, Zr, Hf, Nb, V and Mo.

Desirably, the metallocene is selected from ferrocenes (i.e., where Mₑ is Fe), such as ferrocene, vinyl ferrocenes, ferrocene derivatives, such as butyl ferrocenes or diarylphosphino metal-complexed ferrocenes [e.g., 1,1-bis (diphenylphosphino) ferrocene-palladium dichloride], titanocenes (i.e., where Mₑ is Ti), such as bis(µ⁵-2,4-cyclopentadien-1-yl)-bis-[2,6-difluoro-3-(1H-pyrrol-1-yl)phenyl] titanium which is available commercially from IGM Resins B.V., Netherlands under the tradename "IRGACURE" 784DC, and derivatives and combinations thereof. A particularly desirable metallocene is ferrocene.

And bis-alkylmetallocenes, for instance, bis-alkylferrocenes (such as diferrocenyl ethane, propanes, butanes and the like) are also desirable for use herein, particularly since about half of the equivalent weight of the material (as compared to a non-bis-metallocene) may be employed to obtain the sought-after results, all else being unchanged. Of these materials, diferrocenyl ethane is particularly desirable.

Of course, other materials may be well-suited for use as the metallocene component. For instance, Mₑ[CW₃-CO-CH=C(O⁻)-CW'₃]₂, where Mₑ is as defined above, and W and W' may be the same or different and may be selected from H, and halogens, such as F and Cl. Examples of such materials include platinum (II) acetyl acetonate ("PtACAC"), cobalt (II) acetyl acetonate ("CoACAC"), nickel (II) acetyl acetonate ("NiACAC") and copper (II) acetyl acetonate ("CuACAC"). Combinations of those materials may also be employed.

A number of photoinitiators may be employed herein to provide the benefits and advantages of the present invention to which reference is made above. Photoinitiators enhance the rapidity of the curing process when the photocurable compositions as a whole are exposed to electromagnetic radiation. Certain metallocenes, such as "IRGACURE" 784DC, may serve a dual purpose as both metallocene and photoinitiator.

Examples of suitable photoinitiators for use herein include, but are not limited to, photoinitiators available commercially from IGM Resins B.V., Netherlands under the "IRGACURE" and "DAROCUR" tradenames, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4-,4-trimethyl pentyl) phosphine oxide and 2-hydroxy-2-methyl-1-phenyl-propan-1-one), and 819 [bis(2,4,6-trimethyl benzoyl) phenyl phosphine oxide] and "DAROCUR" 1173 (2-hydroxy-2-methyl-1-phenyl-1-propane) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof.

Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE" 819), 2,4,6-trimethylbenzoyldiphenylphosphine oxide (e.g. "IRGACURE" TPO), ethyl (2,4,6-trimethylbenzoyl) phenylphosphinate (e.g. "IRGACURE" TPO-L) and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., "IRGACURE" 1700), as well as the visible photoinitiator bis(η⁵-2,4-cyclopentadien-1-yl)-bis[2,6-difluoro-3-(1H-pyrrol-1-yl)phenyl]titanium (e.g., "IRGACURE" 784DC).

The plasticizer component is selected from:

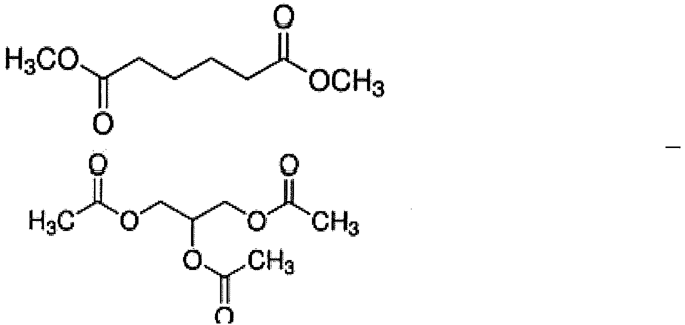

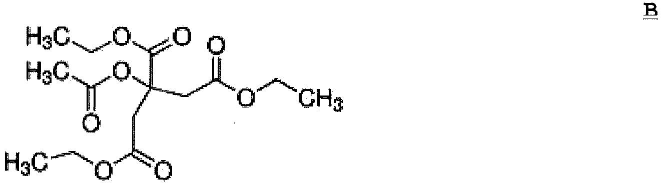

The plasticizer component is used in an amount of about 10 weight percent to less than about 30 weight percent, preferably as about 15 to about 20 weight percent, based on the total composition.

Accelerators may also be included in the inventive cyanoacrylate compositions, such as any one or more selected from calixarenes and oxacalixarenes, silacrowns, crown ethers, cyclodextrins, poly(ethyleneglycol) di(meth)acrylates, ethoxylated hydric compounds and combinations thereof.

Of the calixarenes and oxacalixarenes, many are known and are reported in the patent literature. See e.g. U.S. Patent Nos. 4,556,700, 4,622,414, 4,636,539, 4,695,615, 4,718,966, and 4,855,461.

For instance, as regards calixarenes, those within the following structure are useful herein: 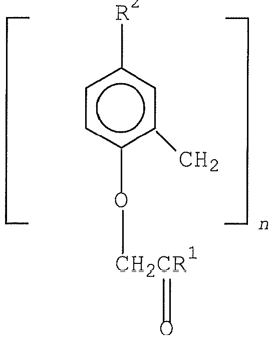 where R¹ is alkyl, alkoxy, substituted alkyl or substituted alkoxy; R² is H or alkyl; and n is 4, 6 or 8.

One particularly desirable calixarene is tetrabutyl tetra[2-ethoxy-2-oxoethoxy]calix-4-arene.

A host of crown ethers are known. For instance, examples which may be used herein either individually or in combination, include 15-crown-5, 18-crown-6, dibenzo-18-crown-6, benzo-15-crown-5-dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7. See U.S. Patent No. 4,837,260 (Sato).

Of the silacrowns, again many are known, and are reported in the literature.

Specific examples of silacrown compounds useful in the inventive compositions include: 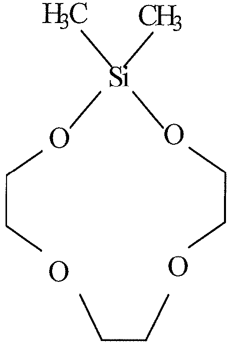 dimethylsila-11-crown-4; 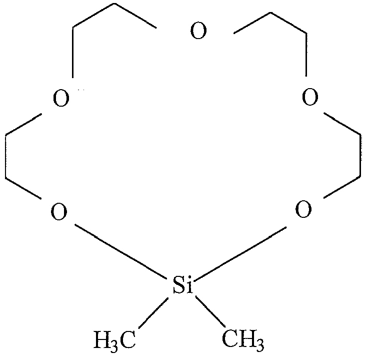 dimethylsila-14-crown-5; 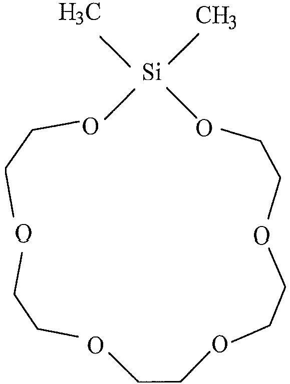 and dimethylsila-17-crown-6.
See e.g. U.S. Patent No. 4,906,317 (Liu).

Many cyclodextrins may be used in connection with the present invention. For instance, those described and claimed in U.S. Patent No. 5,312,864 (Wenz), as hydroxyl group derivatives of an α, β or γ-cyclodextrin would be appropriate choices as an accelerator component.

For instance, poly(ethylene glycol) di(meth)acrylates suitable for use herein include those within the following structure: 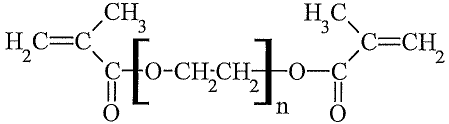 where n is greater than 3, such as within the range of 3 to 12, with n being 9 as particularly desirable. More specific examples include PEG 200 DMA, (where n is about 4) PEG 400 DMA (where n is about 9), PEG 600 DMA (where n is about 14), and PEG 800 DMA (where n is about 19), where the number (e.g., 400) represents the average molecular weight of the glycol portion of the molecule, excluding the two methacrylate groups, expressed as grams/mole (i.e., 400 g/mol). A particularly desirable PEG DMA is PEG 400 DMA.

And of the ethoxylated hydric compounds (or ethoxylated fatty alcohols that may be employed), appropriate ones may be chosen from those within the following structure: 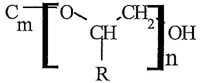 where Cₘ can be a linear or branched alkyl or alkenyl chain, m is an integer between 1 to 30, such as from 5 to 20, n is an integer between 2 to 30, such as from 5 to 15, and R may be H or alkyl, such as C₁₋₆ alkyl.

When used, the accelerator embraced by the above structures should be included in the compositions in an amount within the range of from about 0.01 weight percent to about 10 weight percent, with the range of about 0.1 weight percent to about 0.5 weight percent being desirable, and about 0.4 weight percent of the total composition being particularly desirable.

A stabilizer package is also ordinarily found in cyanoacrylate compositions. The stabilizer package may include one or more free radical stabilizers and anionic stabilizers, each of the identity and amount of which are well known to those of ordinary skill in the art. See e.g. U.S. Patent Nos. 5,530,037 and 6,607,632.

The source of radiation emitting electromagnetic waves chosen to photocure the inventive compositions may be selected from ultraviolet light, visible light, electron beam, x-rays, infrared radiation and combinations thereof. Desirably, ultraviolet light is the radiation of choice, with appropriate sources including "H", "D", "V", "X", "M" and "A" lamps, mercury arc lamps, and xenon arc lamps; microwave-generated ultraviolet radiation; solar power and fluorescent light sources. Any of these electromagnetic radiation sources may use in conjunction therewith reflectors and/or filters, so as to focus the emitted radiation onto a specific portion of a substrate onto which has been dispensed a photocurable composition and/or within a particular region of the electromagnetic spectrum. Similarly, the electromagnetic radiation may be generated directly in a steady fashion or in an intermittent fashion so as to minimize the degree of heat build-up. Although the electromagnetic radiation employed to cure the photocurable compositions into desired reaction products is often referred to herein as being in the ultraviolet region, that is not to say that other radiation within the electromagnetic spectrum may not also be suitable. For instance, in certain situations, radiation in the visible region of the electromagnetic spectrum may also be advantageously employed, whether alone or in combination with, for instance, radiation in the ultraviolet region. Of course, microwave and infrared radiation may also be advantageously employed under appropriate conditions.

Higher or lower radiation intensities, greater or fewer exposures thereto and length of exposure and/or greater or lesser distances of the source of radiation to the composition may be required to complete curing, depending of course on the particular components of a chosen composition.

More specifically with respect to radiation intensity, the chosen lamp should have a power rating of at least about 100 watts per inch (about 40 watts per cm), with a power rating of at least about 300 watts per inch (about 120 watts per cm) being particularly desirable. Also, since the inclusion of a photoinitiator in the composition may shift the wavelength within the electromagnetic radiation spectrum at which cure occurs, it may be desirable to use a source of electromagnetic radiation whose variables (e.g., wavelength, distance, and the like) are readily adjustable.

During the curing process, the composition will be exposed to a source of electromagnetic radiation that emits an amount of energy, measured in KJ/m², determined by parameters including: the size, type and geometry of the source; the duration of the exposure to electromagnetic radiation; the intensity of the radiation (and that portion of radiation emitted within the region appropriate to effect curing); the absorbency of electromagnetic radiation by any intervening materials, such as substrates; and the distance the composition lies from the source of radiation. Those persons of skill in the art should readily appreciate that curing of the composition may be optimized by choosing appropriate values for these parameters in view of the particular components of the composition.

To effect cure, the source of electromagnetic radiation may remain stationary while the composition passes through its path. Alternatively, a substrate coated with the photocurable composition may remain stationary while the source of electromagnetic radiation passes thereover or therearound to complete the transformation from composition to reaction product. Still alternatively, both may traverse one another, or for that matter remain stationary, provided that the photocurable composition is exposed to electromagnetic radiation sufficient to effect cure.

Commercially available curing systems, such as the "ZETA" 7200 or 7400 ultraviolet curing chamber (Henkel Corporation, Rocky Hill, CT), Fusion UV Curing Systems F-300 B (Fusion UV Curing Systems, Buffalo Grove, IL), Hanovia UV Curing System (Hanovia Corp., Newark, NJ), BlackLight Model B-100 (Spectroline, Westbury, NY) and RC500 A Pulsed UV Curing System (Xenon Corp., Woburn, MA), are well-suited for the purposes described herein.

The required amount of energy may be delivered by exposing the composition to a less powerful source of electromagnetic radiation for a longer period of time, through for example multiple passes, or alternatively, by exposing the composition to a more powerful source of electromagnetic radiation for a shorter period of time. In addition, each of those multiple passes may occur with a source at different energy intensities. In any event, those persons of skill in the art should choose an appropriate source of electromagnetic radiation depending on the particular composition, and position that source at a suitable distance therefrom which, together with the length of exposure, optimizes transformation. Also, it may be desirable to use a source of electromagnetic radiation that is delivered in an intermittent fashion, such as by pulsing or strobing, so as to ensure a thorough and complete cure without causing excessive heat build-up.

In another aspect of the invention, there is provided a method of bonding together two substrates, which method includes applying to at least one of the substrates a composition as described above, and thereafter mating together the substrates for a time sufficient to permit the adhesive to fixture. For many applications, the substrate should become fixed by the inventive compositions in less than about 150 seconds, and depending on the substrate as little as about 30 seconds.

In yet another aspect of the invention, there are provided cured products of the so-described compositions.

The invention will be further illustrated by the examples which follow.

### EXAMPLES

Photocurable compositions were prepared from the constituents noted below in Table 1 in the amounts recorded. Each composition also contained PMMA as a thickener in an amount of 6 weight percent and a stabilizer. Samples D-G are reference compositions not part of the invention.

**Table 1**

| **Constituents** | | **Sample/Amt. (wt%)** | | | | | | |
|---|---|---|---|---|---|---|---|---|
| **Type** | **Identity** | **A** | **B** | **C** | **D** | **E** | **F** | **G** |
| Cyanoacrylate | Ethyl CA | Bal. | Bal. | Bal. | Bal. | Bal. | Bal. | Bal. |
| Metallocene | Ferrocene | 0.1 | 0.1 | 0.1 | 0.1 | 0.1 | 0.1 | 0.1 |
| Photoinitiator | 2,4,6-Trimethylbenzoyldiphenyl phosphine oxide | 0.5 | 0.5 | 0.5 | 0.5 | 0.5 | 0.5 | 0.5 |
| Plasticizer | Dimethyl adipate^{A} | 25 | | | | | | |
| | Acetyl triethyl citrate^{B} | | 25 | | | | | |
| | CITROFOL A II^{C} | | | 25 | | | | |
| | Dibutyl sebacate | | | | 25 | | | |
| | MORFLEX 540 | | | | | 25 | | |
| | HEXAMOLL DINCH | | | | | | 25 | |
| | MORFLEX 560 | | | | | | | 25 |

The plasticizers referred to as compounds A, B and C are shown below:

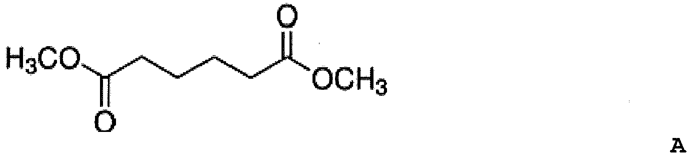

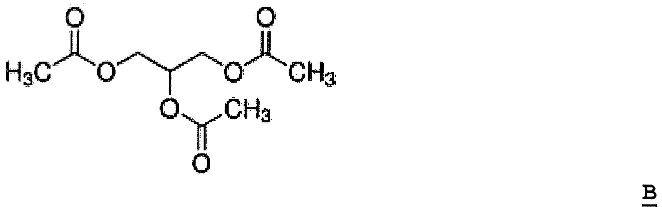

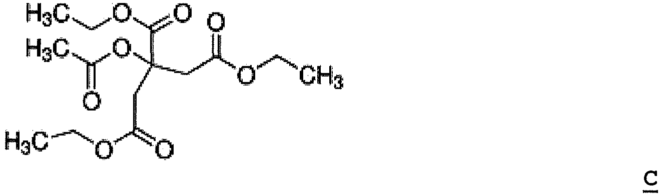

Apart from the plasticizers noted as compounds A, B or C, the remaining plasticizers (shown below) contain either an aromatic ring or a cycloaliphatic ring and have molecular weights greater than 300. While dibutyl sebacate is a straight chain ester, the chain length is 8 carbon atoms (not 3 or 4 carbon atoms) and the ester is 4 carbon atoms (not 1, 2 or 3 carbon atoms).

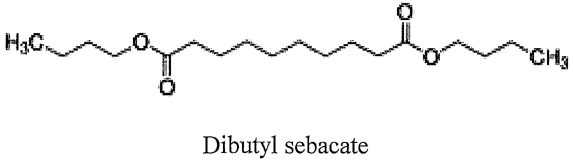

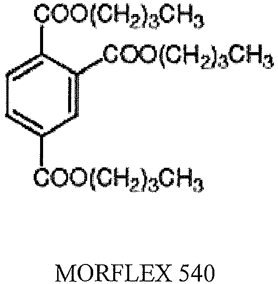

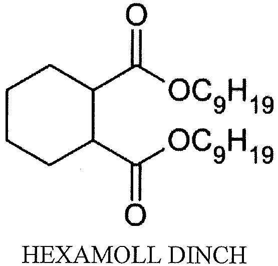

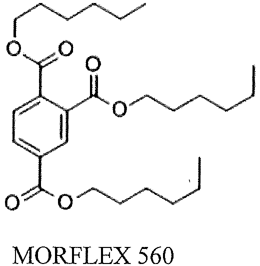

MORFLEX 540 (Tributyl trimellitate) and MORFLEX 560 (Trihexyl trimellitate) are each available commercially from Vartellus Holdings LLC, Indianapolis, IN and HEXAMOLL DINCH (1,2-Cyclohexane dicarboxylic acid diisononyl ester) is available commercially from BASF Corporation, Florham Park, NJ.

For additional comparative purposes, LOCTITE 4310, commercially available from Henkel Corporation, Rocky Hill, CT, was included in Table 2. LOCTITE 4310 contains ethyl cyanoacrylate, a metallocene and photoinitiator and PMMA, consistent with U.S. Patent No. 5,922,783.

For instance, the elongating at break (in percent) of Samples A-G and LOCTITE 4310 after cure through exposure to radiation in the electromagnetic spectrum. More specifically, each of the seven samples and LOCTITE 4310 was applied to a transparent mold and exposed to UV light at 365 nm generated from a Fusion UV System equipped with D bulb. The sample was cured for a period of time of 30 seconds per side at an intensity of 100 mW/cm², generating films with a thickness ranging from 0.025 to 0.034 inches. In addition to elongation at break data, the appearance of the cured composition is also noted in Table 3. Replicates of five specimens were prepared and evaluated for each sample.

Table 2 below shows observations for a variety of evaluations.

**Table 2**

| **Physical Properties** | **Sample** | | | | | | | |
|---|---|---|---|---|---|---|---|---|
| | **A** | **B** | **C** | **D** | **E** | **F** | **G** | **LOCTITE 4310** |
| Elongation at break (%) | 35 | 125 | 53 | 5.6 | 1.8 | 3.7 | 1.6 | 5 |
| Appearance after UV cure | Transparent | Transparent | Transparent | Opaque, phase separated portion | Opaque, phase separated portion | Opaque, phase separated portion | Opaque, phase separated portion | Transparent |
| Blockshear strength (psi) | 702 | 1474 | 1636 | 863 | 2112 | 1151 | 1191 | 2730 |

As may be seen in Table 2, the elongation at break for Samples A, B and C is at least 35%. Indeed, Sample A is 35%, while Sample C is 53% and Sample B is 125%. Each of these samples, like the control without plasticizer, cure to a transparent reaction product. The other samples show an elongation at break of less than 35%, in fact less than 10% (the highest being 5.6%) and cure to an opaque, phase separated reaction product.

Additional photocurable cyanoacrylate compositions were prepared from the constituents noted below in Table 3 in the amounts recorded. Each composition also contained PMMA as a thickener in an amount of 6 weight percent and a stabilizer.

**Table 3**

| **Constituents** | | **Sample/Amt(wt%)** | | | | | |
|---|---|---|---|---|---|---|---|
| **Type** | **Identity** | **H** | **I** | **J** | **K** | **L** | **M** |
| Cyanoacrylate | Ethyl CA | Bal. | Bal. | Bal. | Bal. | Bal. | Bal. |
| Metallocene | Ferrocene | 0.1 | 0.1 | 0.1 | 0.1 | 0.1 | 0.1 |
| Photoinitiator | 2,4,6-Trimethylbenzoyldiphenyl phosphine oxide | 0.5 | 0.5 | 0.5 | 0.5 | 0.5 | 0.5 |
| Plasticizer | Acetyl triethyl citrate | -- | -- | 10 | 15 | 20 | 30 |
| | CITROFOL A II | 15 | 25 | -- | -- | -- | -- |

Each of Samples H-M was applied between interior facing surfaces of a pair of polycarbonate specimens having a length and width of 1 inch and a thickness of ¼ inch. The so formed assembly was exposed to UV light at 365 mm generated from a LOCTITE Zeta 7411-S UV Flood System at an intensity of 30 mW/cm² for 10 seconds.

Table 4 below shows observations for a variety of evaluations.

**Table 4**

| **Physical Properties** | **Sample** | | | | | |
|---|---|---|---|---|---|---|
| | **H** | **I** | **J** | **K** | **L** | **M** |
| Elongation at break (%) | 15 | 101 | 24 | 28 | 55 | 207 |
| Appearance after UV cure | Transparent | Transparent | Transparent | Transparent | Transparent | Transparent |
| Blockshear strength (psi) | 2580 | 1948 | 2507 | 2250 | 1930 | 1012 |
| Swing Test (cycles) | 42 | 26 | 9 | >60 | >60 | 34 |

For instance, the elongating at break (in percent) of Samples H-M after cure through exposure to radiation in the electromagnetic spectrum. More specifically, each of the six samples was applied to a transparent mold and exposed to UV light at 365 nm generated from a Fusion UV System equipped with D bulb. The sample was cured for a period of time of about 30 seconds per side at an intensity of 100 mW/cm², generating films with a thickness ranging from 0.025 to 0.034 inches. In addition to elongation at break data, the appearance of the cured composition is also noted in Table 4, as is block shear strength on polycarbonate specimens and swing test data. Replicates of five specimens were prepared and evaluated for each sample.

As may be seen in Table 4, the elongation at break varies depending on whether the plasticizer is acetyl triethyl citrate or CITROFOL II, and whether the amount chosen is on the higher end (e.g., 25 weight percent or 30 weight percent) compared with the lower end (e.g., 10 weight percent, 15 weight percent or 20 weight percent).

With acetyl triethyl citrate, at a 30 weight percent level an elongation at break of 207% is observed though at 15% that value drops to 28%. With CITROFOL II, at a 25 weight percent level an elongation at break of 101% is observed.

The block shear strength was measured on polycarbonate substrates after mating the substrates with the samples therebetween, and exposing the so mated substrates to UV radiation. Desirably, and as shown in Table 4, reaction products of the samples show block shear strength on polycarbonate of greater than about 1800 psi, desirably greater than about 1900 psi, such as greater than about 2200 psi.

The swing test measurement was made by using a digital multifunctional controller cycle through 180° rotations starting at the 9 o'clock position, where one cycle was rotating counterclockwise from the 9 o'clock position to the 3 o'clock position, holding there for 1 second, and then rotating clockwise back to the 9 o'clock position, and holding there for 1 second. In this way, the time to perform 60 cycles was measured to be 149 seconds. Each sample that was subjected to the swing test was applied to the outer circumference of PVC tubing over which a Y connector was inserted, and then exposed to UV light emitted from a LOCTITE-branded 405 LED Flood system to cure the Y connector to the PVC tubing. A 1-kg mass was clamped about 1 inch from the end of the PVC tubing on the non-bonded side and was allowed to hang freely for the cycling exercise. The number of cycles at which the PVC tubing completely detached from the Y connector was noted as the point of failure and recorded.

## Claims

1. A cyanoacrylate composition, comprising:
(a) a cyanoacrylate component;
(b) a metallocene component;
(c) a photoinitiator component; and
(d) from 10 weight percent to 30 weight percent a plasticizer component, wherein the plasticizer component is selected from:

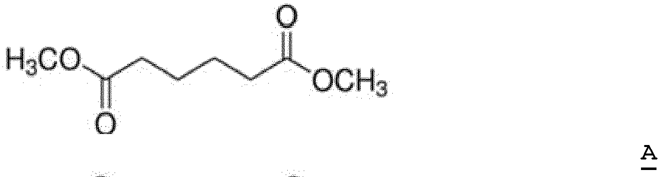

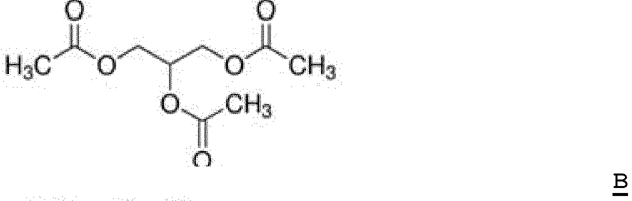

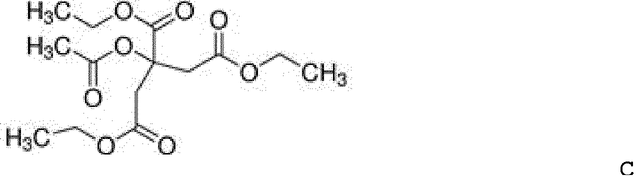

2. The composition according to Claim 1, wherein
plasticizer component is present in an amount of from 15 weight percent to 30 weight percent, more preferably
from 15 weight percent to 20 weight percent.

3. The composition according to Claim 1, further comprising a stabilizer.

4. The composition according to Claim 1, further comprising a stabilizing amount of an acidic stabilizer and a free radical inhibitor.

5. The composition according to Claim 1, further comprising an accelerator component, wherein the accelerator component is preferably selected from the group consisting of calixarene, oxacalixarene, silacrown, cyclodextrin, crown ether, poly(ethyleneglycol) di(meth)acrylate, ethoxylated hydric compound, and combinations thereof.

6. The composition according to Claim 1, further comprising additives selected from the group consisting of tougheners, shock resistant additives, thixotropy conferring agents, thickeners, dyes, and combinations thereof.

7. Reaction products of the composition according to Claim 1, wherein reaction products thereof, preferably show substantially no phase separation and/or wherein reaction products thereof, preferably show an elongation at break of greater than 35%, preferably greater than 125%, as determined in the description.

8. The composition according to Claim 1, wherein reaction products thereof show greater than 60 cycles in the swing test, as determined in the description.

9. A method of bonding together two substrates, at least one of which being constructed from a thermoplastic material, comprising the steps of:
applying a cyanoacrylate composition according to Claim 1, to at least one of the substrates and mating together the substrates for a time sufficient to permit the adhesive to fixture.

## Patentansprüche

1. Cyanacrylatzusammensetzung, umfassend:
(a) eine Cyanacrylatkomponente;
(b) eine Metallocenkomponente;
(c) eine Photoinitiatorkomponente; und
(d) von 10 Gewichtsprozent bis 30 Gewichtsprozent einer Weichmacherkomponente, wobei die Weichmacherkomponente ausgewählt ist aus:

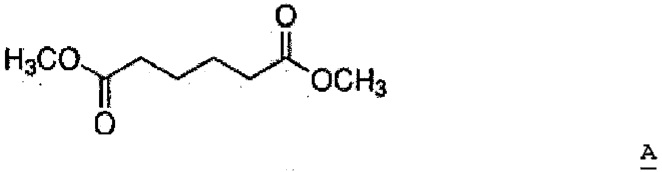

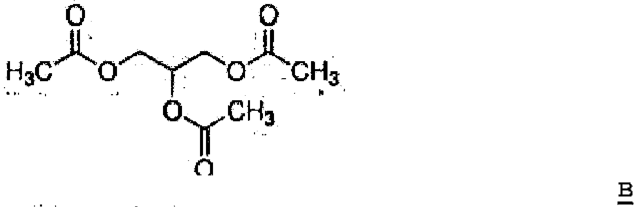

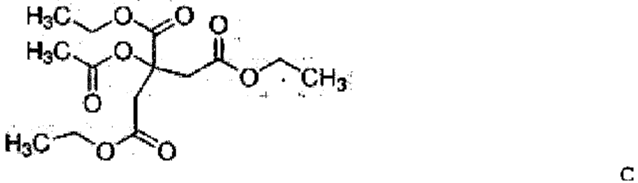

2. Zusammensetzung nach Anspruch 1, wobei die Weichmacherkomponente in einer Menge von 15 Gewichtsprozent bis 30 Gewichtsprozent, mehr bevorzugt von 15 Gewichtsprozent bis 20 Gewichtsprozent, vorliegt.

3. Zusammensetzung nach Anspruch 1, ferner umfassend einen Stabilisator.

4. Zusammensetzung nach Anspruch 1, ferner umfassend eine stabilisierende Menge eines sauren Stabilisators und eines Radikalinhibitors.

5. Zusammensetzung nach Anspruch 1, ferner umfassend eine Beschleunigerkomponente, wobei die Beschleunigerkomponente vorzugsweise aus der Gruppe bestehend aus Calixaren, Oxacalixaren, Silakrone, Cyclodextrin, Kronenether, Poly(ethylenglycol)di(meth)acrylat, einer ethoxylierten hydrischen Verbindung und Kombinationen davon ausgewählt ist.

6. Zusammensetzung nach Anspruch 1, ferner umfassend Zusätze, die aus der Gruppe bestehend aus Zähigmachern, schlagfesten Zusätzen, Thixotropie übertragenden Mitteln, Verdickern, Farbstoffen und Kombinationen davon ausgewählt sind.

7. Umsetzungsprodukte der Zusammensetzung nach Anspruch 1,
wobei Umsetzungsprodukte davon vorzugsweise im Wesentlichen keine Phasentrennung vorweisen und/oder wobei Umsetzungsprodukte davon vorzugsweise eine Bruchdehnung von mehr als 35 %, vorzugsweise mehr als 125 %, vorweisen, wie in der Beschreibung bestimmt.

8. Zusammensetzung nach Anspruch 1, wobei Umsetzungsprodukte davon mehr als 60 Zyklen in dem Schwenktest vorweisen, wie in der Beschreibung bestimmt.

9. Verfahren zum Verkleben von zwei Substraten, von denen mindestens eines aus einem thermoplastischen Material hergestellt ist, umfassend die Schritte:
Auftragen einer Cyanacrylatzusammensetzung nach Anspruch 1 auf mindestens eines der Substrate und Zusammenfügen der Substrate für eine Zeit, die ausreicht, um den Klebstoff fixieren zu lassen.

## Revendications

1. Composition de cyanoacrylate, comprenant :
(a) un composant cyanoacrylate ;
(b) un composant métallocène ;
(c) un composant photo-initiateur ; et
(d) de 10 pour cent en poids à 30 pour cent en poids d'un composant plastifiant, dans laquelle le composant plastifiant est choisi parmi :

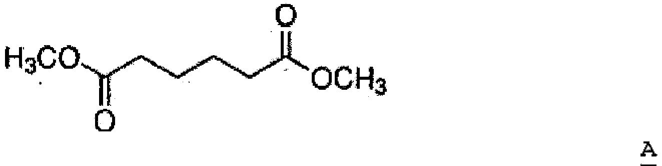

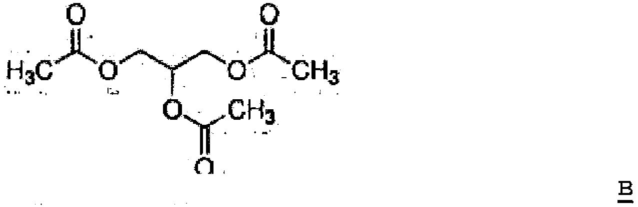

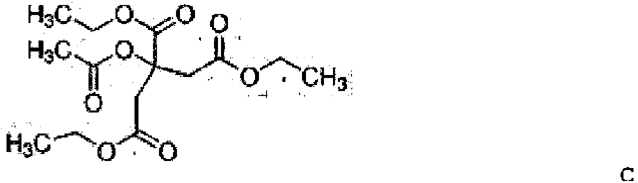

2. Composition selon la revendication 1, dans laquelle le composant plastifiant est présent en une quantité allant de 15 pour cent en poids à 30 pour cent en poids, plus préférablement de 15 pour cent en poids à 20 pour cent en poids.

3. Composition selon la revendication 1, comprenant en outre un stabilisant.

4. Composition selon la revendication 1, comprenant en outre une quantité stabilisante d'un stabilisateur acide et d'un inhibiteur de radicaux libres.

5. Composition selon la revendication 1, comprenant en outre un composant accélérateur, dans laquelle le composant accélérateur est de préférence choisi dans le groupe constitué de calixarène, oxacalixarène, sila-couronne, cyclodextrine, éther couronne, di(méth)acrylate de poly(éthylène glycol), composé hydrique éthoxylé, et combinaisons de ceux-ci.

6. Composition selon la revendication 1, comprenant en outre des additifs choisis dans le groupe constitué de durcisseurs, additifs résistants aux chocs, agents conférant de la thixotropie, épaississants, teintures, et combinaisons de ceux-ci.

7. Produits de réaction de la composition selon la revendication 1,
dans lesquels les produits de réaction de celle-ci ne présentent de préférence sensiblement aucune séparation de phases et/ou dans lesquels les produits de réaction de celle-ci présentent de préférence un allongement à la rupture supérieur à 35 %, de préférence supérieur à 125 %, tel que déterminé dans la description.

8. Composition selon la revendication 1, dans laquelle des produits de réaction de celle-ci présentent plus de 60 cycles dans l'essai d'oscillation, tel que déterminé dans la description.

9. Procédé de liaison de deux substrats l'un à l'autre, dont au moins l'un est construit à partir d'un matériau thermoplastique, comprenant les étapes consistant à :
appliquer une composition de cyanoacrylate selon la revendication 1 sur au moins l'un des substrats et accoupler les substrats l'un à l'autre pendant un temps suffisant pour permettre à l'adhésif de se fixer.
